# FASCICULE DE BREVET EUROPEEN

(11) **EP 4 198 792 B1**
(45) Date de publication et mention de la délivrance du brevet: **26.06.2024**
(21) Numéro de dépôt: 22212359.8
(22) Date de dépôt: 08.12.2022
(51) Int. Cl.: G06F 21/72, G06F 21/57, G06F 21/35, G06Q 20/32, H04W 12/47, H04W 4/80, H04L 9/32, G06F 21/62, G06Q 20/34

(54) **TRANSACTION NFC**
NFC-TRANSAKTION
NFC TRANSACTION

(30) Priorité: 14.12.2021 FR 2113471
(43) Date de publication de la demande: 21.06.2023
(73) Titulaire: STMicroelectronics (Rousset) SAS, 13790 Rousset (FR); PROTON WORLD INTERNATIONAL N.V., 1831 Diegem (BE)
(72) Inventeur: VAN NIEUWENHUYZE, Olivier, 1970 WEZEMBEEK-OPPEM (BE); CHARLES, Alexandre, 13390 AURIOL (FR)
(74) Mandataire: Cabinet Beaumont

(56) Documents cités:
- WO-A1-2016/026025
- US-A1- 2008 162 312
- US-A1- 2014 364 058
- US-A1- 2015 278 798
- PARDIS POURGHOMI: "Towards a mobile payment market: A Comparative Analysis of Host Card Emulation and Secure Element", INTERNATIONAL JOURNAL OF COMPUTER SCIENCE AND INFORMATION SECURITY (IJCSIS), vol. 13, no. 12, 1 décembre 2015 (2015-12-01), XP055512159,

## Description

### Domaine technique

La présente description concerne de façon générale les dispositifs électroniques, et de façon plus particulière les dispositifs électroniques adaptés à traiter des données secrètes. Plus particulièrement, la présente description concerne des dispositifs électroniques adaptés à mettre en oeuvre une communication en champ proche (NFC, Near Field Communication), et en particulier une transaction NFC, dans laquelle au moins une partie des données échangées sont des données secrètes et/ou une partie des données échangées sont des données sensibles permettant, par exemple, un procédé d'identification ou d'authentification d'un utilisateur.

### Technique antérieure

Les dispositifs électroniques complexes, tels que les téléphones portables, les tablettes électroniques, les ordinateurs, etc, intègrent, au fil du temps, de plus en plus de fonctionnalités et permettent la mise en place de services numériques et/ou digitaux afin de s'intégrer au mieux à la vie quotidienne. A titre d'exemple, certains téléphones portables, et plus particulièrement des téléphones intelligents (smartphones), intègrent des services digitaux tels qu'un service de paiement bancaire, ou encore un service d'utilisation de titres de transport en commun, de billets de spectacle, une authentification de l'utilisateur auprès d'un système à distance (bancaire, administration publique, etc.). Pour mettre en oeuvre ces fonctionnalités, ces appareils peuvent intégrer des composants électroniques spécifiques à ces fonctionnalités, comme par exemple des composants sécurisés qui permettent de conserver/stocker des informations d'identification, de référence et d'authentification, généralement désignées par "credentials", et des ressources (assets) du fournisseur du service digital, des capteurs de mouvement, un module de communication en champ proche (Near Field Communication, NFC), etc.

Une difficulté découlant de l'ajout de nouvelles fonctionnalités, est que des données secrètes et/ou des données sensibles sont échangées entre différents modules d'un même dispositif électronique sans être protégées.

Document US2008/162312 A1 concerne un procédé de protection de données sensibles transmises dans un système NFC.

### Résumé de l'invention

Il existe un besoin pour des communications champ proche plus fiables.

Il existe un besoin pour des communications champ proche respectant la confidentialité et/ou l'anonymat des utilisateurs de ces communications.

Il existe un besoin pour des transactions NFC plus fiables.

Il existe un besoin pour des transactions NFC respectant la confidentialité et/ou l'anonymat des utilisateurs de ces transactions.

Un mode de réalisation pallie tout ou partie des inconvénients des communications en champ proche connues.

Un mode de réalisation pallie tout ou partie des inconvénients des transactions NFC connues.

Selon un premier aspect, un mode de réalisation prévoit un procédé de réalisation d'une transaction NFC entre un terminal mobile et un module distant, ledit terminal comprenant un processeur hébergeant une application établissant la transaction NFC, un module de communication en champ proche, et un élément sécurisé distinct du processeur, le procédé comprenant au moins les étapes successives suivantes :
(a) ledit module de communication en champ proche stocke, dans ledit élément sécurisé, des premières données envoyées par ledit module distant ;
(b) ledit module de communication en champ proche envoie des deuxièmes données à ladite première application pour l'avertir que lesdites premières données ont été stockées dans ledit élément sécurisé ; et
(c) ladite première application demande audit élément sécurisé de lui fournir lesdites premières données.

Un autre mode de réalisation prévoit un terminal mobile adapté à mettre en oeuvre une transaction NFC avec un module distant, le terminal comprenant un processeur hébergeant une application établissant la transaction NFC, un module de communication en champ proche, et un élément sécurisé distinct du processeur, le procédé de réalisation de la transaction NFC comprenant au moins les étapes successives suivantes :
(a) ledit module de communication en champ proche stocke, dans ledit élément sécurisé, des premières données envoyées par ledit module distant ;
(b) ledit module de communication en champ proche envoie des deuxièmes données à ladite première application pour l'avertir que lesdites premières données ont été stockées dans ledit élément sécurisé ; et
(c) ladite première application demande audit élément sécurisé de lui fournir lesdites premières données.

Selon un mode de réalisation, l'application est autorisée à mettre en oeuvre une transaction NFC par des logiciels d'interface, les logiciels d'interface étant des logiciels hébergés par le processeur et exécutant des commandes envoyées par ladite application.

Selon un mode de réalisation, si les logiciels d'interface ne comprennent pas d'autorisation concernant ladite application alors pendant l'étape (b) les logiciels d'interface interdisent à l'application de demander la clé à l'élément sécurisé.

Selon un mode de réalisation, l'application est une application système, ou
l'application est une application fiable ayant reçu une autorisation permanente à mettre en oeuvre une transaction NFC, ou
l'application a reçu une autorisation temporaire pour mettre en oeuvre une transaction NFC, dans lequel l'élément sécurisé fournit l'autorisation temporaire concernant l'application auxdits logiciels d'interface, l'élément sécurisé ayant obtenu cette autorisation temporaire auprès d'un serveur extérieur.

Selon un mode de réalisation, lesdites deuxièmes données sont représentatives desdites premières données.

Selon un mode de réalisation, lesdites deuxièmes données sont des données aléatoires.

Selon un mode de réalisation, ledit élément sécurisé chiffre lesdites premières données.

Selon un mode de réalisation, lesdites premières données sont chiffrées avec un algorithme de chiffrement asymétrique.

Selon un mode de réalisation, si l'application n'est pas autorisée à mettre en oeuvre une transaction NFC alors pendant l'étape (b) l'élément sécurisé refuse d'envoyer les premières données à ladite application.

Selon un mode de réalisation, la transaction NFC est une transaction mise en oeuvre par un procédé de communication en champ proche.

Selon un mode de réalisation, la transaction NFC est une transaction pendant laquelle le terminal et le module distant sont susceptibles d'échanger des troisièmes données secrètes.

Selon un mode de réalisation, la transaction NFC est une transaction bancaire.

Selon un mode de réalisation, l'étape (a) est précédée par une étape (d) dans laquelle le module de communication en champ proche est capable de détecter que des données sont des données sensibles.

Selon un mode de réalisation, l'étape (a) est précédée par une étape (d) dans laquelle le module de communication en champ proche détecte que les premières données comprennent des données sensibles.

Un autre mode de réalisation prévoit un système comprenant un terminal décrit précédemment et un module distant.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, la mise en oeuvre d'une transaction NFC ;
la figure 2 représente, de façon très schématique et sous forme de blocs, un mode de réalisation d'un terminal mobile pouvant mettre en oeuvre un mode de mise en oeuvre d'une transaction NFC ;
la figure 3 représente un schéma bloc illustrant un mode de mise en oeuvre d'une transaction NFC revendiqué;
la figure 4 représente un schéma bloc illustrant un autre mode de mise en oeuvre d'une transaction NFC revendiqué;
la figure 5 représente un schéma bloc illustrant un mode de mise en oeuvre d'une transaction NFC revendiqué;
la figure 6 représente un schéma bloc illustrant un autre mode de mise en oeuvre d'une transaction NFC revendiqué; et
la figure 7 représente un schéma bloc illustrant un autre mode de mise en oeuvre d'une transaction NFC non revendiqué.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le détail des données échangées pendant une transaction NFC du type de celles décrites ci-après n'est pas décrit. Les différents protocoles de communication NFC propres aux types de transaction NFC décrites sont à la portée de la personne du métier, et sont compatibles avec les modes de mises en oeuvre décrits ci-après.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

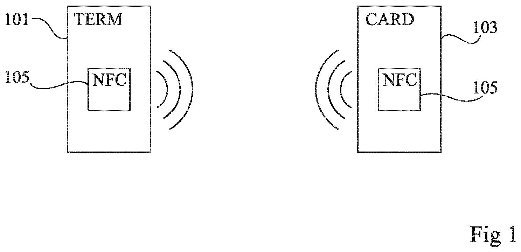

La figure 1 illustre, très schématiquement et sous forme de blocs, une transaction NFC entre un dispositif 101 (TERM) électronique servant de terminal mobile, ou terminal mobile 101, et un dispositif 103 (CARD) électronique servant de module distant, ou module distant 103.

On appelle transaction ici une communication particulière dont la finalité est une opération commerciale et/ou monétaire dans lequel un dispositif, le terminal 101, est le terminal de "paiement" qui met en oeuvre la transaction et l'autre dispositif, le module distant 103, est celui qui accepte ou non la transaction. Un exemple de transaction concernée par les modes de réalisation décrits ci-après est une transaction bancaire. Un autre exemple de transaction concernée est l'achat d'un titre de transport. D'autres types de transactions sont envisageables, et les deux exemples cités précédemment ne sont pas limitatifs. La transaction NFC concernée ici est particulièrement une transaction dans laquelle les deux dispositifs s'échangent des données sensibles et/ou secrètes.

Une transaction NFC est une communication sans fil et sans contact utilisant, pour sa mise en oeuvre, une technologie de communication en champ proche, appelée ci-après communication NFC. Les technologies de communication en champs proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (module distant, transpondeur ou carte).

On suppose le cas de deux dispositifs électroniques, par exemple le terminal 101 et le module distant 103, mais tout ce qui va être décrit s'applique plus généralement à tout système dans lequel un transpondeur capte un champ électromagnétique rayonné par un lecteur, borne ou terminal. Dans ce type de communication, les dispositifs électroniques 101 et 103 sont positionnés à portée l'un de l'autre, c'est-à-dire à une distance généralement inférieure à 10 cm. Selon un autre exemple, les dispositifs 101 et 103 sont en contact mécanique l'un avec l'autre.

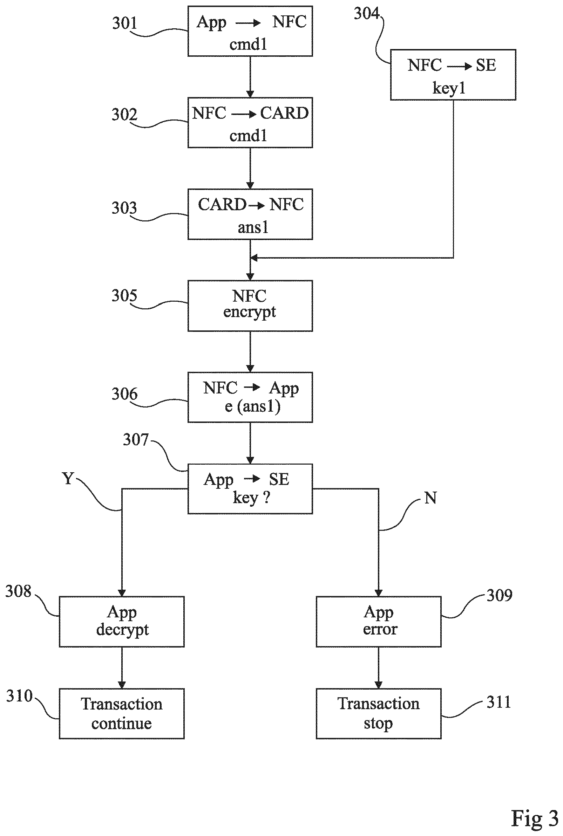

Selon les applications, pour une communication NFC, un des dispositifs, le terminal 101, fonctionne en mode dit lecteur tandis que l'autre, le module distant 103, fonctionne en mode dit carte, ou les deux dispositifs communiquent en mode poste à poste (peer to peer - P2P). Chaque dispositif comporte divers circuits électroniques 105 (NFC) adapté à émettre un signal radiofréquence (RF) transmis à l'aide d'une antenne d'un circuit oscillant/résonnant. Le champ radiofréquence généré par l'un des dispositifs, par exemple le terminal 101, est capté par l'autre dispositif, par exemple le module distant 103, qui se trouve à portée et qui comporte également une antenne. Lorsque le terminal 101 émet un champ électromagnétique pour initier une communication avec le module distant 103, ce champ est capté par le module distant 103 dès qu'il se trouve à portée. Ce champ est détecté par les circuits 105 du module distant 103 qui, s'ils sont en veille, sont réactivés. Cela se traduit par une variation de la charge constituée par les circuits 105 du module distant 103 sur le circuit résonant de génération du champ du terminal 101. En pratique, la variation correspondante de phase ou d'amplitude du champ émis est détectée par le terminal 101 qui entame alors un protocole de communication NFC avec le module distant 103. Côté terminal 101, on détecte en pratique si l'amplitude de la tension aux bornes du circuit résonnant descend en dessous d'un seuil ou si la tension aux bornes du circuit résonnant présente un déphasage supérieur à un seuil. Une fois que le terminal 101 a détecté la présence du module distant 103 dans son champ, il entame une procédure d'établissement de communication, mettant en oeuvre des émissions de requêtes par le terminal 101 et de réponses par le module distant 103. Les émissions de requêtes et de réponses sont décrites plus en détail en relation avec les figures 3 à 7.

Le terminal 101 est un dispositif électronique qui peut être, par exemple, fixe ou mobile. C'est le terminal 101 qui est en charge d'amorcer la communication. A titre d'exemple, le terminal 101 est un dispositif électronique adapté à mettre en oeuvre une application de transaction en tant que terminal de la transaction. Selon un exemple plus détaillé, le terminal 101 est un téléphone mobile, par exemple un téléphone intelligent (smartphone) mettant en oeuvre une application point de vente (POS - Point of Sale), c'est-à-dire une application lui permettant de mettre en oeuvre une transaction en tant que terminal. Selon un autre exemple, le terminal 101 pourrait être un dispositif connecté, comme une montre connectée, adapté à mettre en oeuvre une communication en champ proche, et plus particulièrement une transaction NFC.

Le module distant 103 est un dispositif généralement mobile. Selon un mode de réalisation préféré, le module distant 103 est une carte à microcircuits (ou carte à puce), par exemple une carte bancaire ou une carte de transport. A titre de variante, le module distant 103 pourrait être un téléphone mobile. Le module distant 103 comprend différents circuits électroniques adaptés à mettre en oeuvre diverses commandes envoyées par le terminal 101, comme par exemple, des circuits d'authentification, des circuits de cryptographie, etc.

Dans les systèmes récents, un même dispositif NFC peut opérer en mode carte ou en mode lecteur (par exemple dans le cas d'une communication en champ proche entre deux téléphones mobiles), et peut choisir, selon le cas, s'il fonctionne en mode carte ou en mode lecteur. Selon un exemple, le module 101 pourrait être utilisé comme lecteur ou terminal mettre en oeuvre une transaction de paiement, et, dans un autre cas, être utilisé comme carte, par exemple, pour valider un titre de transport.

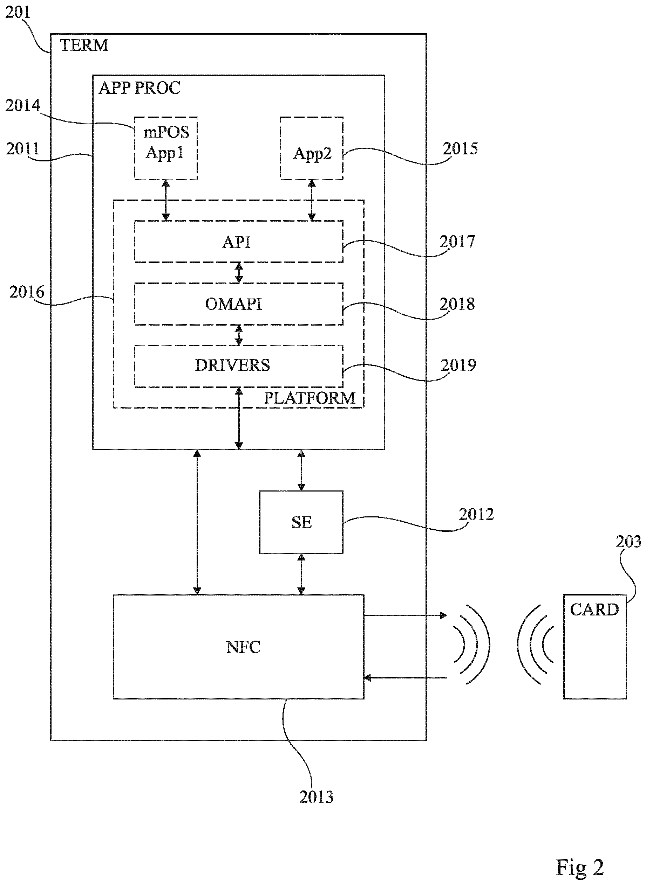

La figure 2 représente, schématiquement mais plus en détails, et sous forme de blocs, un mode de réalisation d'une transaction NFC, du type de celle décrite en relation avec la figure 1, entre un dispositif terminal 201 (TERM), ou terminal 201, et un module distant 203 (CARD). La figure 2 illustre plus en détails la structure matérielle (en traits pleins) et logicielle (en traits pointillés) du terminal 201, le module distant 203 étant identique au module distant 103 décrit en relation avec la figure 1.

Le terminal 201 comprend, au moins :
- un processeur 2011 (APP PROC) ;
- un élément sécurisé (SE) 2012 ; et
- un module de communication en champ proche (NFC) 2013.

Le processeur 2011 est un processeur adapté, entre autres, à mettre en oeuvre une architecture logicielle du terminal 201, décrite ci-après.

L'élément sécurisé 2012 est un circuit ou un composant sécurisé, par exemple, un processeur, ou une unité de calcul, adapté à manipuler des données secrètes, ou données confidentielles. L'élément sécurisé est distinct du processeur 2011. L'élément sécurisé 2012 peut, par exemple, mettre en oeuvre des algorithmes d'authentification, de chiffrement et/ou de déchiffrement de données, de génération de clé de chiffrement et/ou de déchiffrement, etc. Selon un exemple, l'élément sécurisé 2012 est un élément sécurisé embarqué dans le terminal 201, mais, selon une variante, l'élément sécurisé 2012 peut être un élément sécurisé intégré au terminal 203. L'avantage d'avoir un élément sécurisé embarqué ou intégré est que ce permet d'avoir un haut niveau de protection, puisque l'élément sécurisé fait partie du dispositif 100. Selon encore une autre variante, l'élément sécurisé 2012 peut faire partie d'une plateforme sécurisée qui l'isole physiquement des autres composants du dispositif 201, ou l'élément sécurisé 2012 peut être combiné au processeur 2011 en bénéficiant d'une partie matérielle qui l'isole physiquement du processeur 2011, par exemple en utilisant une technologie de type TrustZone. Ces deux dernières variantes présentent un niveau de protection plus bas que les variantes précédentes. Selon un mode de réalisation, l'élément sécurisé 2012 est capable de savoir si une transaction NFC est une transaction pendant laquelle des informations et des données sensibles peuvent être échangées.

Le module de communication en champ proche 2013, ou module NFC 2013, est un ensemble de circuits et d'une ou plusieurs antennes, permettant au terminal 201 de mettre en oeuvre une communication en champ proche, et, en particulier, une transaction NFC du type de celle décrite en relation avec la figure 1. Le module NFC permet donc d'envoyer et de recevoir des données, comme les circuits 105 décrits en relation avec la figure 1. Selon un mode de réalisation, le module NFC est capable de détecter que des données sont des données sensibles, par exemple, en vérifiant le type de la commande envoyée, et le type de la réponse reçue ensuite, par exemple en se basant sur une table de correspondance stockée dans le module NFC 2013, ou, par exemple, en comptant le nombre de commandes suivant la sélection (ou la réponse de la sélection) d'une application. Le module NFC pourrait combiner les deux méthodes.

Ces trois éléments sont adaptés à communiquer entre eux par différents moyens de communication. Selon un exemple, le processeur 2011 est adapté à communiquer avec le module NFC 2013, par exemple, par l'intermédiaire d'un bus de type I2C (Inter Integrated Circuit), d'un bus de type SPI (Serial Peripheral Interface), ou d'un bus de type UART (Universal Asynchronous Receiver Transmitter). Selon un exemple, le processeur 2011 est adapté à communiquer avec l'élément sécurisé 2012, par exemple, par l'intermédiaire d'un bus de type I2C (Inter Integrated Circuit) ou d'un bus de type SPI (Serial Peripheral Interface). Selon un exemple, l'élément sécurisé 2012 est adapté à communiquer avec le module NFC 2013, par exemple, par l'intermédiaire d'un bus de type SWP (Single Wire Protocol) en utilisant, par exemple, un protocole de communication de type HCI (Host-Controller Interface) ou un protocole de communication de type CLT (ContactLESS), ou, par exemple, par l'intermédiaire d'une mémoire de données partagée en utilisant un mécanisme de communication de type IPC (Inter-Process Communication). Pour communiquer ensemble, l'élément sécurisé 2012 et le module NFC 2013 peuvent, par exemple, utiliser un protocole de communication de type VNP (VPP Network Protocol, VPP signifiant Virtual Primary Platform), un tel protocole peut être utilisé avec un bus de type I2C ou de type SPI.

Par ailleurs, le terminal 201, et plus particulièrement le processeur 2011, est adapté à mettre en oeuvre différents logiciels lui permettant d'exécuter différentes fonctionnalités, dont, plus particulièrement, celle d'engager et d'effectuer une transaction NFC avec un autre dispositif électronique, comme le module distant 203. L'architecture logicielle du terminal 201, et plus précisément du processeur 2011, comprend différentes applications permettant à un utilisateur de mettre en oeuvre différentes fonctionnalités et plusieurs couches logicielles d'interface 2016 (PLATFORM), ou des logiciels d'interface 2016 permettant de traduire les commandes envoyées par les applications en commandes interprétables par les différents circuits et composants du terminal 201, comme l'élément sécurisé 2012 et le module NFC 2013.

En figure 1, le terminal 201 est adapté à mettre en oeuvre au moins une application 2014 (mPOS App) dont la fonctionnalité est, entre autres, de mettre en oeuvre une transaction NFC du type de celle décrite en relation avec la figure 1 en tant que terminal. L'application 2014 peut être une application de type point de vente. Selon un exemple, le terminal 201 peut mettre en oeuvre une ou plusieurs autres applications 2015 (App 2). On appelle dans cette description "application" un logiciel dont la manipulation est accessible à l'utilisateur du terminal 201. Pour mettre en oeuvre les différentes fonctionnalités du terminal 201, les applications sont adaptées à utiliser les différents circuits et composants du terminal 201 en envoyant des commandes aux couches logicielles d'interface 2016.

Les couches logicielles d'interface 2016 comprennent :
- une couche d'interface primaire 2017 (API) ;
- une couche de filtrage 2018 (OMAPI) ; et
- une couche de commande 2019 (DRIVERS) des circuits et composants du terminal 201.

La couche d'interface primaire 2017 est une interface logicielle recevant directement les ordres d'opérations à réaliser provenant des applications 2014 et 2015 et qui convertit ces opérations en une série de commandes adaptées aux différents circuits et composants du terminal 201. Autrement dit, si une application envoie l'ordre de réaliser une opération requêtant l'utilisation de plusieurs circuits ou composants du terminal 201, l'interface 2017 convertit cet ordre en un ensemble de commandes. Une opération peut être réalisée en mettant en oeuvre une ou plusieurs commandes à destination d'un ou plusieurs circuits ou composants du terminal 201.

La couche de filtrage 2018 est une interface de filtrage logicielle adaptée à autoriser, limiter ou interdire, une application, par exemple les applications 2014 et 2015, à utiliser tout ou partie d'un ou plusieurs circuits ou composants du terminal 201. Dit autrement, la couche de filtrage 2018 reçoit les commandes envoyées par l'interface 2017 et décide si elle les transmet ou non en fonction de l'application qui a formulé la commande initiale. La couche de filtrage 2018 peut se baser sur différents critères pour autoriser ou non l'accès aux circuits et composants du terminal 201 à une application. Selon un exemple, la couche de filtrage 2018 peut autoriser l'accès à un ou à une partie d'un circuit ou composant du terminal 201 à une première application, et refuser cet accès à une deuxième application.

Selon un premier exemple, si l'application est une application système, c'est-à-dire une application produite par le fabricant du terminal 201, ou par le fabricant ou concepteur des couches logicielles d'interface 2016, l'application peut avoir une autorisation permanente d'accès à tous les circuits ou composants, ou seulement à des circuits et composants choisis par le fabricant, et a au moins l'autorisation de mettre en oeuvre une transaction NFC. De plus, à l'inverse, une application système peut avoir un accès limité, permanent ou non, à tout ou partie d'un ou plusieurs circuits ou composants du terminal 201. Ainsi, certaines parties de circuits ou composants, ou certains circuits ou composants du terminal 201 peuvent n'être accessibles qu'à des applications système, et une application ne remplissant pas ce critère recevra systématiquement un refus à chaque fois qu'elle essayera d'envoyer une commande à ces parties de circuit ou composants, ou circuits ou composants.

Selon un deuxième exemple, l'application peut être une application fiable ayant passé différents tests de fiabilité auprès du fabricant du terminal 201, ou auprès du fabricant ou concepteur des couches logicielles d'interface 2016, qui l'a donc autorisé de façon permanente à avoir accès à tout ou partie des circuits ou composants du terminal 201. Selon un exemple, l'application a au moins l'autorisation de mettre en oeuvre une transaction NFC. Une application fiable de ce type peut être assimilée à une application système, et donc en présenter les mêmes caractéristiques.

Selon un troisième exemple, l'application peut avoir la possibilité de s'authentifier, périodiquement, auprès d'un serveur externe au terminal 201 pour obtenir une autorisation temporaire d'accès à tout ou partie des circuits et composants du terminal 201. Selon un exemple, l'application a au moins l'autorisation temporaire de mettre en oeuvre une transaction NFC. Dans la suite de la description on dira qu'une application est autorisée à avoir accès à tel circuit ou à tel composant du terminal 201 si la couche de filtrage 2018 lui en autorise l'accès. Selon un exemple, l'autorisation temporaire d'accès aux circuits et composants du terminal 201 peut être conservée par les logiciels d'interface 2016, par exemple par l'interface de filtrage 2018, les logiciels d'interface 2016 étant, par exemple, adapté à mettre en oeuvre l'authentification de l'application auprès du serveur externe.

Selon un quatrième exemple, un circuit ou composant du terminal 201, par exemple l'élément sécurisé 2012, peut être adapté à déterminer quelles applications ont l'autorisation de mettre une ou plusieurs de ses fonctions. Un circuit ou composant du terminal 201 peut, par exemple, fournir, à la couche de filtrage 2018, une liste indiquant quelle application est autorisée à mettre en oeuvre une ou plusieurs de ses fonctions. Selon une variante, ce circuit ou composant peut fournir des autorisations temporaires à tout ou partie d'une application, par exemple, en autorisant un certain nombre d'utilisations d'une ou plusieurs de ses fonctions. C'est la couche de filtrage 2018 qui applique ces autorisations au moment où une application envoie des ordres d'utilisation d'une ou plusieurs fonctions d'un ou plusieurs circuits ou composants du terminal 201. Selon un exemple préféré, l'élément sécurisé 2012 comprend une liste de règles, par exemple stockée dans une mémoire, indiquant les autorisations des différents applications mises en oeuvre par le terminal 201.

La couche de commande 2019 des circuits et composants du terminal 201 est l'ensemble des logiciels de commande des circuits et composants 201, c'est-à-dire les logiciels pilotant les circuits et composants du terminal 201. Autrement dit, la couche de commande 2019 est l'ensemble des programmes permettant de mettre en oeuvre les commandes fournies par l'interface 2017. Chaque circuit ou composant est associé à un logiciel de commande adapté à le mettre en oeuvre. Ces logiciels de commande sont communément appelés logiciels pilote, ou "driver".

La figure 3 est un schéma bloc illustrant des étapes d'un mode de mise en oeuvre d'un procédé de mise en oeuvre, ou procédé de réalisation, d'une transaction NFC du type de la transaction NFC décrite en relation avec la figure 1. Ces étapes sont exécutées par le terminal 201 et le module distant 203 décrit en relation avec la figure 2.

A une étape initiale 301 (App -> NFC cmd1), l'application 2014 du terminal 201 décide de mettre en oeuvre une transaction NFC avec le module distant 203. Pour cela, l'application 2014, une fois que la communication a été établie (par exemple selon les normes d'anticollision définies par NFC-Forum ou ISO14443 ou définies par tout autre protocole mis en oeuvre par le module NFC 2013), a besoin d'envoyer une première commande cmd1 au module distant 203 en utilisant le module NFC 2013. L'application 2014 transmet alors une requête aux couches logicielles d'interface 2016 pour utiliser le module NFC 2013 pour envoyer la commande cmd1 au module distant 203. Cette opération n'étant, à priori, pas une opération sensible la couche de filtrage 2018 autorise cette opération.

A une étape 302 (NFC -> CARD cmd1), successive à l'étape 301, le module NFC a reçu la commande cmd1 à envoyer au module distant 203 et l'envoie en utilisant un procédé de communication en champ proche du type de celui décrit précédemment.

A une étape 303 (CARD -> NFC ans1), successive à l'étape 302, le module distant 203 a reçu et traité la commande cmd1 et fournit une réponse ans1 au module NFC 2013 du terminal 201. Cette réponse ans1 est susceptible de contenir des données sensibles. Selon un exemple, si la transaction NFC est une transaction bancaire, des données bancaires sensibles sont susceptibles de faire partie de la réponse ans1, comme, par exemple, des données d'identification ou des données permettant l'identification d'un utilisateur. Selon un mode de réalisation, le module NFC 2013 est capable, en fonction du type de transaction NFC mise en oeuvre, de déterminer si des données comprises dans la réponse ans1 sont des données sensibles ou non. Par exemple, quand le module NFC détecte que la transaction NFC est une transaction bancaire, il est capable de comprendre que les données échangées sont des données sensibles.

A une étape 304 (NFC -> SE key1), mise en oeuvre en parallèle des opérations 301, 302 ou 303, le module NFC 2013 demande à l'élément sécurisé 2012 de lui fournir une clé de chiffrement. Le module NFC peut, par exemple, envoyer une commande particulière pour demander la clé à l'élément sécurisé. Le module NFC 2013 et l'élément sécurisé 2012 ayant une ligne de communication directe, comme décrit précédemment, l'élément sécurisé 2012 fournit une clé de chiffrement key1 au module NFC 2013. Selon un exemple, le module NFC 2013 est capable d'assigner un canal de communication comme défini dans la norme HCI.

A une étape 305 (NFC encrypt), successive à l'étape 303, le module NFC 2013 ayant reçu la réponse ans1 du module distant 203 et la clé de chiffrement key1 de la part de l'élément sécurisé, peut chiffrer la réponse ans1 en utilisant la clé de chiffrement key1 pour obtenir une réponse chiffrée e(ans1). Ainsi les données sensibles de la réponse ans1 sont protégées par chiffrement.

A une étape 306 (NFC -> App e(ans1)), successive à l'étape 305, le module NFC 2013 envoie la réponse chiffrée e(ans1) à l'application 2014.

A une étape 307 (App -> SE key ?), successive à l'étape 306, l'application 2014 reçoit la réponse chiffrée e(ans1) et ne peut ni la lire, ni l'interpréter sans la déchiffrer. L'application 2014 envoie donc une demande de clé de déchiffrement à l'élément sécurisé 2012. Cette opération étant une opération sensible, l'interface de filtrage 2018 vérifie si l'application 2014 est autorisée à envoyer cette demande à l'élément sécurisé 2012. Si l'application 2014 est autorisée (sortie Y) l'étape suivante est une étape 308 (App decrypt), sinon (sortie N) l'étape suivante est une étape 309 (App error).

A l'étape 308, l'application 2014 étant autorisée, l'élément sécurisé 2012 lui fournit une clé de déchiffrement, par exemple la clé key1 si c'est une clé de chiffrement et de déchiffrement, sinon une clé de déchiffrement différent de la clé key1. L'application 2014 peut alors déchiffrer la réponse ans1.

A une étape 310 (Transaction continue), successive à l'étape 308, l'application 2014 peut continuer à envoyer des commandes et à recevoir des réponses de la part du module distant 203 en utilisant le même mécanisme décrit précédemment, en utilisant des clés de chiffrement et/ou de déchiffrement différentes à chaque réponse reçue de la part du module distant 203. Selon une variante, la même clé de chiffrement peut être utilisée à chaque réponse reçue de la part du module distant 203 pour accélérer la transaction. Dans ce cas, en fin de transaction, la clé de chiffrement pourrait être rendue inefficace, par exemple, en étant supprimée ou en étant invalidée. On peut considérer que la transaction est terminée lorsqu'il n'y a pas eu de nouvelles commandes pendant une durée déterminée, par exemple une durée de l'ordre de 500 ms ou de 1 s, ou, par exemple, lorsque le module distant n'est plus à portée du terminal, ou bien si une application différente de l'application 2014 est lancée. Selon une variante, le module NFC pourrait aussi décider à partir d'une certaine durée ou d'une commande particulière, que la transaction NFC ne comprend plus de données sensibles et ainsi arrêter de chiffrer les données échangées.

A l'étape 309, l'application 2014 a été reconnue comme non autorisée par l'interface de filtrage 2018, l'élément sécurisé 2012 ne lui fournit pas de clé de déchiffrement. L'application 2014 ne peut donc pas déchiffrer la réponse. En étant reconnue comme non autorisée l'application 2014 n'aura pas accès aux données sensibles de la transaction NFC.

A une étape 311 (Transaction stop), successive à l'étape 309, l'application 2014 n'ayant pas accès aux données sensibles et/ou secrètes, l'application 2014 ne peut pas mener la transaction NFC, et la transaction NFC s'arrête d'elle-même.

Un avantage de ce mode de réalisation est qu'une application n'étant pas autorisée par l'interface de filtrage 2018 ne peut avoir accès aux données sensibles envoyées par le module distant, puisqu'elles restent chiffrées avec une clé non accessible à l'application.

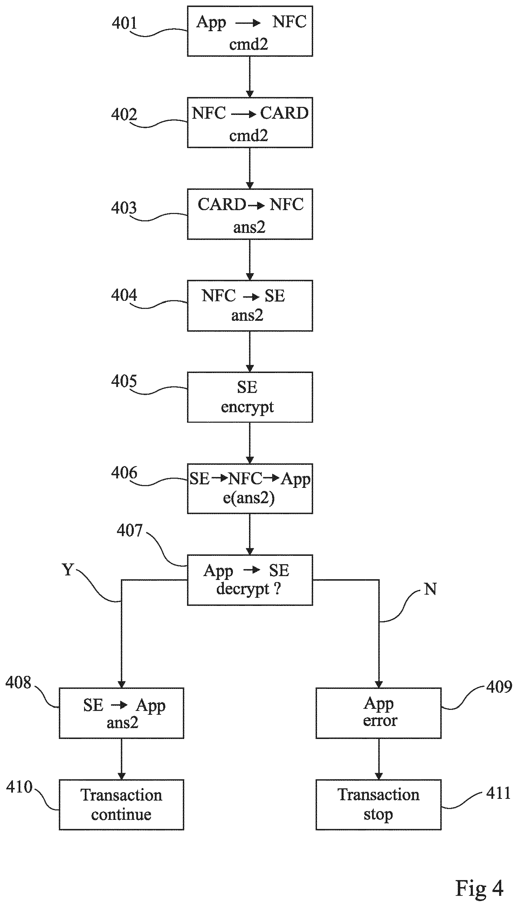

La figure 4 est un schéma bloc illustrant des étapes d'un mode de mise en oeuvre d'un procédé de mise en oeuvre, ou procédé de réalisation, d'une transaction NFC du type de la transaction NFC décrite en relation avec la figure 1. Ces étapes sont exécutées par le terminal 201 et le module distant 203 décrit en relation avec la figure 2.

A une étape initiale 401 (App -> NFC cmd2), l'application 2014 du terminal 201 décide de mettre en oeuvre une transaction NFC avec le module distant 203. Pour cela, l'application 2014, une fois que la communication a été établie (par exemple selon les normes d'anticollision définies par NFC-Forum ou ISO14443 ou définies par tout autre protocole mis en oeuvre par le module NFC 2013), a besoin d'envoyer une première commande cmd2 au module distant 203 en utilisant le module NFC 2013. L'application 2014 transmet alors une requête aux couches logicielles d'interface 2016 pour utiliser le module NFC pour envoyer la commande cmd2 au module distant 203. Cette opération n'étant, à priori, pas une opération sensible la couche de filtrage 2018 autorise cette opération.

A une étape 402 (NFC -> CARD cmd2), successive à l'étape 401, le module NFC 2013 a reçu la commande cmd2 à envoyer au module distant 203 et l'envoie en utilisant un procédé de communication en champ proche du type de celui décrit précédemment.

A une étape 403 (CARD -> NFC ans2), successive à l'étape 402, le module distant 203 a reçu et traité la commande cmd2 et fournit une réponse ans2 au module NFC 2013 du terminal 201. Cette réponse ans2, comme la réponse ans1 décrite en relation avec la figure 3, est susceptible de contenir des données sensibles.

A une étape 404 (NFC -> SE ans2), successive à l'étape 403, le module NFC 2013 envoie, à l'élément sécurisé 2012, la réponse ans2 afin que l'élément sécurisé la chiffre. L'étape 404 peut être optimisée, par exemple si le module NFC 2013 est capable de détecter les données sensibles parmi les données de la réponse ans2, le module NFC peut demander à l'élément sécurisé de ne chiffrer que les données sensibles de la réponse ans2. Selon une variante, le module NFC envoie la réponse ans2 à l'élément sécurisé, et l'élément sécurisé choisit parmi les données de la réponse ans2 les données sensibles à chiffrer.

A une étape 405 (SE encrypt), successive à l'étape 404, l'élément sécurisé 2012 chiffre la réponse ans2 en utilisant une clé de chiffrement qu'il est le seul à connaître, pour obtenir une réponse chiffrée e(ans2). Ainsi les données sensibles de la réponse ans2 sont protégées par chiffrement.

A une étape 406 (SE -> NFC -> App e(ans2)), successive à l'étape 405, l'élément sécurisé 2012 retourne au module NFC 2013 la réponse chiffrée e(ans2). Ensuite, le module NFC 2013 envoie la réponse chiffrée e(ans2) à l'application 2014.

A une étape 407 (App -> SE decrypt ?), successive à l'étape 406, l'application 2014 reçoit la réponse chiffrée e(ans2) et ne peut la lire sans la déchiffrer. L'application 2014 envoie donc une demande de déchiffrement à l'élément sécurisé 2012. Cette opération étant une opération sensible, l'interface de filtrage 2018 vérifie si l'application 2014 est autorisée à envoyer cette demande à l'élément sécurisé 2012. Si l'application 2014 est autorisée (sortie Y) l'étape suivante est une étape 408 (SE -> App decrypt), sinon (sortie N) l'étape suivante est une étape 409 (App error).

A l'étape 408, l'application 2014 étant autorisée à communiquer avec l'élément sécurisé, elle demande à l'élément sécurisé 2012 de déchiffrer la réponse e(ans2). Celui-ci met ce déchiffrement en oeuvre, et renvoie la réponse ans2 à l'application 2014. Selon une variante de réalisation, l'application 2014 peut demander la clé de déchiffrement à l'élément sécurisé et déchiffrer les données elle-même.

A une étape 410 (Transaction continue), successive à l'étape 408, l'application 2014 peut continuer à envoyer des commandes et à recevoir des réponses de la part du module distant 203 en utilisant le même mécanisme décrit précédemment, c'est-à-dire en faisant chiffrer chaque réponse reçue de la part du module distant 203 par l'élément sécurisé 2012. Selon une variante, un seul chiffrement peut être réalisée pour la ou les premières réponses reçues du module distant 203 pour accélérer la transaction.

A l'étape 409, l'application 2014 a été reconnue comme non autorisée. L'application 2014 ne peut donc pas faire déchiffrer la réponse e(ans2). En étant reconnue comme non autorisée l'application 2014 n'aura pas accès aux données sensibles de la transaction NFC.

A une étape 411 (Transaction stop), successive à l'étape 409, l'application 2014 n'ayant pas accès aux données sensibles et/ou secrètes, l'application 2014 ne peut pas mener la transaction NFC, et la transaction NFC s'arrête d'elle-même.

Un avantage de ce mode de réalisation est qu'une application n'étant pas autorisée par l'interface de filtrage 2018 ne peut avoir accès aux données sensibles envoyées par le module distant.

Un autre avantage de ce mode de réalisation est que la gestion de la clé de déchiffrement est l'unique responsabilité de l'élément sécurisé 2012. L'élément sécurisé peut ainsi choisir de la clé de déchiffrement à utiliser, n'utiliser que la même clé, ou bien la changer aussi souvent qu'il le souhaite.

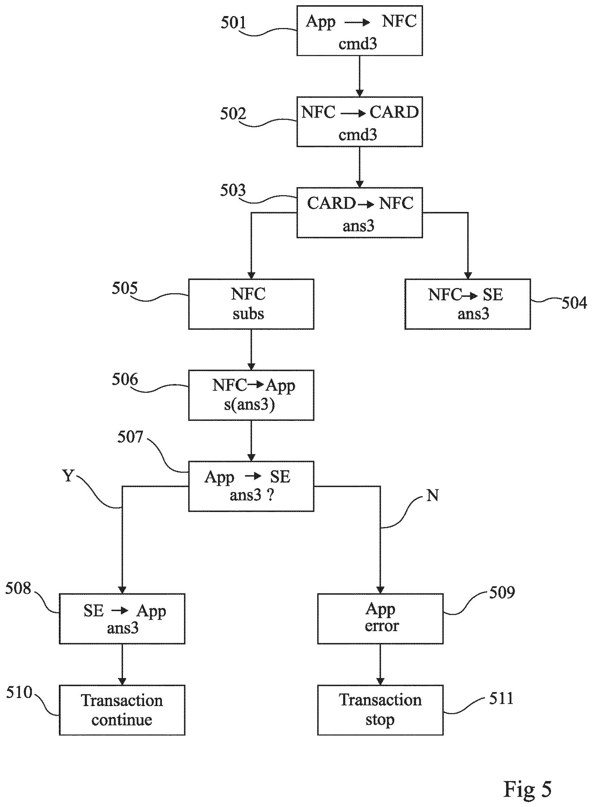

La figure 5 est un schéma bloc illustrant des étapes d'un mode de mise en oeuvre d'un procédé de mise en oeuvre, ou procédé de réalisation, d'une transaction NFC du type de la transaction NFC décrite en relation avec la figure 1. Ces étapes sont exécutées par le terminal 201 et le module distant 203 décrit en relation avec la figure 2.

A une étape initiale 501 (App -> NFC cmd3), l'application 2014 du terminal 201 décide de mettre en oeuvre une transaction NFC avec le module distant 203. Pour cela, l'application 2014, une fois que la communication a été établie (par exemple selon les normes d'anticollision définies par NFC-Forum ou ISO14443 ou définies par tout autre protocole mis en oeuvre par le module NFC 2013), a besoin d'envoyer une première commande cmd3 au module distant 203 en utilisant le module NFC 2013. L'application 2014 transmet alors une requête aux couches logicielles d'interface 2016 pour utiliser le module NFC pour envoyer la commande cmd3 au module distant 203. Cette opération n'étant, à priori, pas une opération sensible la couche de filtrage 2018 autorise cette opération.

A une étape 502 (NFC -> CARD cmd3), successive à l'étape 501, le module NFC 2013 a reçu la commande cmd3 à envoyer au module distant 203 et l'envoie en utilisant un procédé de communication en champ proche du type de celui décrit précédemment.

A une étape 503 (CARD -> NFC ans3), successive à l'étape 502, le module distant 203 a reçu et traité la commande cmd3 et fournit une réponse ans3 au module NFC 2013 du terminal 201. Cette réponse ans3, comme la réponse ans1 décrite en relation avec la figure 3, est susceptible de contenir des données sensibles.

A une étape 504 (NFC -> SE ans3), successive à l'étape 503, le module NFC 2013 envoie, à l'élément sécurisé 2012, la réponse ans3 afin que l'élément sécurisé la stocke. Selon une variante, l'élément sécurisé 2021 peut stocker la réponse ans3 et lui appliquer un procédé de chiffrement, par exemple un procédé de chiffrement asymétrique. Selon une autre variante, le module NFC 2013 envoie la réponse ans3 à l'élément sécurisé 2012, et si celui ci détecte que certaines des données de la réponse ans3 sont des données sensibles, l'élément sécurisé 2012 peut les stocker, et les ôter de la réponse ans3 ou les remplacer par d'autres données avant de retourner la réponse ans3 au module NFC 2013.

A une étape 505 (NFC Subs), successive à l'étape 503, le module NFC prépare une donnée s(ans3) à envoyer à l'application 2014 pour qu'elle comprenne que le module distant 203 a envoyé la réponse ans3. Cette donnée s(ans3) peut être une donnée dépendante de la réponse ans3, comme par exemple la réponse ans3 tronquée, ou la réponse ans3 chiffrée ou signée, ou une donnée indépendante de la réponse ans3 comme une donnée aléatoire ou une donnée type indiquant à l'application 2014 qu'une réponse a été reçue.

A une étape 506 (NFC -> App s(ans3)), successive à l'étape 505, le module NFC 2013 envoie la donnée s(ans3) à l'application 2014.

A une étape 507 (App -> SE ans3 ?), successive à l'étape 506, l'application 2014 reçoit la donnée s(ans3) et comprend qu'elle doit demander à l'élément sécurisé 2012 la réponse ans3. L'application 2014 envoie donc une demande à l'élément sécurisé 2012. Cette opération étant une opération sensible, l'interface de filtrage 2018 vérifie si l'application 2014 est autorisée à envoyer cette demande à l'élément sécurisé 2012. Si l'application 2014 est autorisée (sortie Y) l'étape suivante est une étape 508 (SE -> App decrypt), sinon (sortie N) l'étape suivante est une étape 509 (App error).

A l'étape 508, l'application 2014 étant autorisée à communiquer avec l'élément sécurisé 2012, elle demande à l'élément sécurisé 2012 la réponse ans3. Celui-ci renvoie la réponse ans3 à l'application 2014. Selon une variante, si la réponse ans3 a été chiffrée par l'élément sécurisé 2012, l'application 2014 peut demander le déchiffrement de la réponse ans3 à l'élément sécurisé 2012 ou la déchiffrer elle-même. Dans ce deuxième cas, il est considéré qu'une clé de chiffrement et/ou de déchiffrement a été échangée avant la mise en oeuvre de la transaction NFC pour établir un secret commun. Une technique du type de la technique de Diffie-Hellman peut, en outre, être utilisée ici.

A une étape 510 (Transaction continue), successive à l'étape 508, l'application 2014 peut continuer à envoyer des commandes et à recevoir des réponses de la part du module distant 203 en utilisant le même mécanisme décrit précédemment, en faisant stocker chaque réponse reçue de la part du module distant 203 par l'élément sécurisé 2012. Selon une variante, un seul stockage peut être réalisée pour la ou les premières réponses reçues du module distant 203 pour accélérer la transaction.

A l'étape 509, l'application 2014 a été reconnue comme non autorisée. L'application 2014 ne peut donc pas recevoir la réponse ans3, qu'elle ait été chiffrée ou non. En étant reconnue comme non autorisée l'application 2014 n'aura pas accès aux données sensibles de la transaction NFC.

A une étape 511 (Transaction stop), successive à l'étape 509, l'application 2014 n'ayant pas accès aux données sensibles et/ou secrètes, l'application 2014 ne peut pas mener la transaction NFC, et la transaction NFC s'arrête d'elle-même.

Un avantage de ce mode de réalisation est qu'une application n'étant pas autorisée par l'interface de filtrage 2018 ne peut avoir accès aux données sensibles envoyées par le module distant.

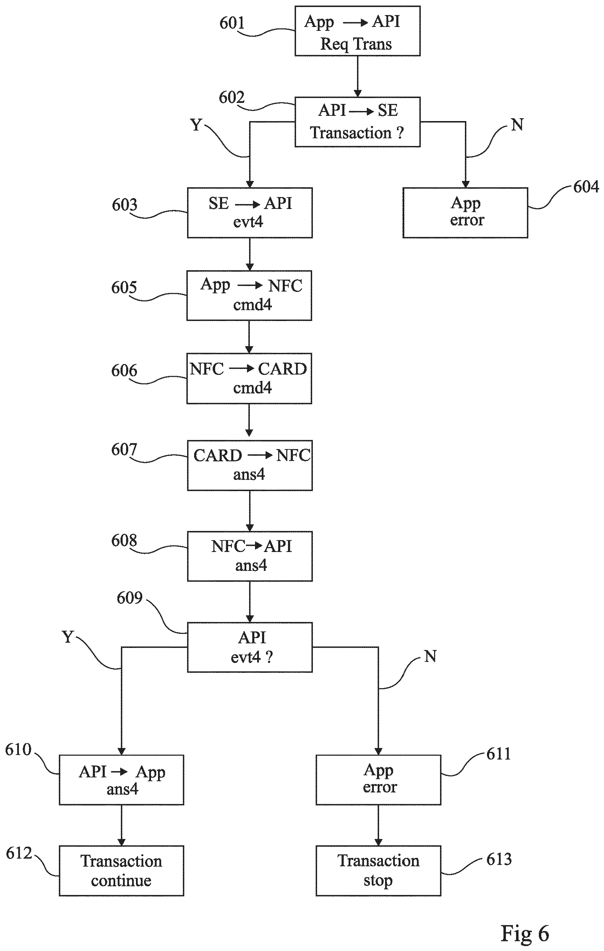

La figure 6 est un schéma bloc illustrant des étapes d'un mode de mise en oeuvre d'un procédé de mise en oeuvre, ou procédé de réalisation, d'une transaction NFC du type de la transaction NFC décrite en relation avec la figure 1. Ces étapes sont exécutées par le terminal 201 et le module distant 203 décrit en relation avec la figure 2.

A une étape initiale 601 (App -> API Req Trans), l'application 2014 du terminal 201 décide de mettre en oeuvre une transaction NFC avec le module distant 203. Pour cela, l'application 2014 envoie une requête d'autorisation à la couche d'interface primaire 2017. Cette requête peut être, par exemple, une requête comprenant une authentification de l'application 2014 auprès de l'élément sécurisé 2012. Cette requête peut, par exemple, comprendre des informations sur le type de transaction NFC autorisé à être mis en oeuvre par l'application, ce qui permet à l'élément sécurisé de filtrer les types de transactions NFC mises en oeuvre par une application.

A une étape 602 (API -> SE Transaction ?), successive à l'étape 601, la couche d'interface primaire 2017 envoie la requête à l'interface de filtrage qui vérifie si l'application est autorisée à être envoyée à l'élément sécurisé 2012. Si l'application 2014 est autorisée (sortie Y) l'étape suivante est une étape 603 (SE -> API evt4), sinon (sortie N) l'étape suivante est une étape 604 (App error).

A l'étape 604, l'application 2014 a été reconnue comme non autorisée et ne sera donc pas en mesure de mettre en oeuvre une transaction. La couche d'interface primaire 2017 peut, par exemple, empêcher toute demande de démarrage de transaction provenant de l'application 2014, ou peut, par exemple, détecter la présence de données sensibles comme cela est décrit ci-après.

A l'étape 603, successive à l'étape 602, l'élément sécurisé 2012 envoie à la couche d'interface primaire 2017 une instruction evt4, ou autorisation temporaire evt4, selon laquelle l'application 2014 peut mettre en oeuvre une transaction NFC. Cette instruction evt4 peut, par exemple, concerner une seule transaction NFC, ou plusieurs transactions NFC consécutives, ou toutes les transactions NFC de l'application 2014. En pratique l'instruction evt4 peut être un évènement logiciel.

A une étape 605 (App -> NFC cmd4), consécutive à l'étape 603, mais pouvant être directement consécutive à l'étape 601, l'application 2014 décide de mettre en oeuvre une transaction NFC avec le module distant 203. L'application 2014 transmet alors une requête aux couches logicielles d'interface 2016 pour utiliser le module NFC 2013 pour envoyer une commande cmd4 au module distant 203. Cette opération n'étant, à priori, pas une opération sensible la couche d'interface primaire 2017 autorise cette opération.

A une étape 606 (NFC -> CARD cmd4), successive à l'étape 605, le module NFC 2013 a reçu la commande cmd4 à envoyer au module distant 203 et l'envoie en utilisant un procédé de communication en champ proche du type de celui décrit précédemment.

A une étape 607 (CARD -> NFC ans4), successive à l'étape 606, le module distant 203 a reçu et traité la commande cmd4 et fournit une réponse ans4 au module NFC 2013 du terminal 201. Cette réponse ans4, comme la réponse ans1 décrite en relation avec la figure 3, est susceptible de contenir des données sensibles.

A une étape 608 (NFC -> API ans4), successive à l'étape 607, le module NFC 2013 envoie, à l'application 2014, la réponse ans4, mais cet envoi est intercepté par la couche d'interface primaire 2017.

A une étape 609 (API evt4 ?), successive à l'étape 608, l'instruction evt4 reçue par la couche d'interface primaire 2017 est mise en oeuvre. Si l'instruction evt4 autorise l'application à mettre en oeuvre la transaction NFC (sortie Y) l'étape suivante est une étape 610 (API -> App ans4), sinon (sortie N) l'étape suivante est une étape 611 (App error). L'envoi de l'instruction evt4 peut être, par exemple, l'envoi d'un évènement logiciel de type transaction comme défini par la norme HCI, cet envoi étant réalisé par l'intermédiaire d'un canal de communication dédié reliant l'élément sécurisé 2012 et le processeur 2011. L'instruction evt4 peut, dans ce cas, comprendre différents paramètres indiquant, par exemple :
- l'application autorisée à effectuer une transaction NFC ;
- le ou les types de transaction NFC concernés ; et/ou
- le nombre de transactions NFC que l'application est autorisée à mettre en oeuvre.

Selon un exemple, l'application 2014 peut être autorisée à mettre en oeuvre deux transactions NFC de type bancaire.

A l'étape 610, l'application 2014 étant autorisée à communiquer avec l'élément sécurisé, la couche d'interface primaire 2017 lui transmet la réponse ans4.

A une étape 612 (Transaction continue), successive à l'étape 610, l'application 2014 peut continuer à envoyer des commandes et à recevoir des réponses de la part du module distant 203 en utilisant le même mécanisme décrit précédemment. Selon une variante, la couche d'interface primaire 2017 peut vérifier à chaque échange si l'application 2014 est autorisée à mettre en oeuvre une transaction NFC, ou alors la couche d'interface primaire 2017 peut considérer que l'autorisation de l'instruction evt4 est valable jusqu'à la fin de la transaction NFC en cours ou bien pendant une durée prédéterminée, ou encore suivant un paramètre compris dans l'instruction evt4.

A l'étape 611, l'application 2014 a été reconnue comme non autorisée et n'est donc pas autorisée à recevoir la réponse ans4. En étant reconnue comme non autorisée l'application 2014 n'aura pas accès aux données sensibles de la transaction NFC.

A une étape 613 (Transaction stop), successive à l'étape 611, l'application 2014 n'ayant pas accès aux données sensibles et/ou secrètes, l'application 2014 ne peut pas mener la transaction NFC, et la transaction NFC s'arrête d'elle-même.

Un avantage de ce mode de réalisation est qu'une application n'étant pas autorisée par l'interface de filtrage 2018 ne peut avoir accès aux données sensibles envoyées par le module distant.

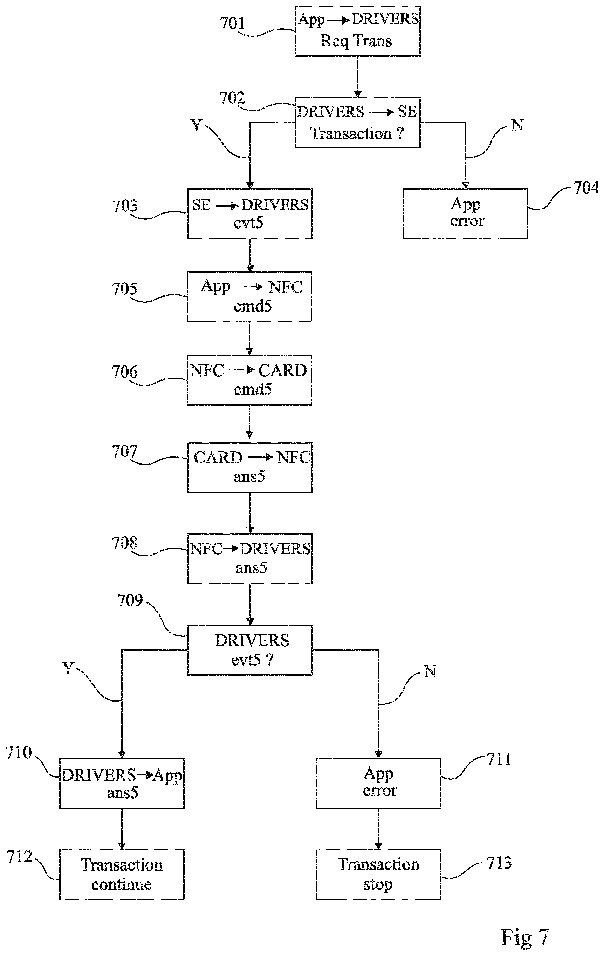

La figure 7 est un schéma bloc illustrant des étapes d'un mode de mise en oeuvre d'un procédé de mise en oeuvre, ou procédé de réalisation, d'une transaction NFC du type de la transaction NFC décrite en relation avec la figure 1. Ces étapes sont exécutées par le terminal 201 et le module distant 203 décrit en relation avec la figure 2.

Le mode de mise en oeuvre de la figure 7 est similaire à la mise en oeuvre décrite en relation avec la figure 6. La différence entre ces deux mises en oeuvre est que dans celle de la figure 7, ce n'est pas la couche d'interface primaire 2017 qui vérifie si l'application est autorisée à mettre en oeuvre la transaction NFC mais la couche de commande 2019 des circuits et composants du terminal 201 qui effectue cette vérification. Dans ce cas, le procédé est donc le suivant.

A une étape initiale 701 (App -> DRIVERS Req Trans), l'application 2014 du terminal 201 décide de mettre en oeuvre une transaction NFC avec le module distant 203. Pour cela, l'application 2014 envoie une requête à la couche de commande 2019. Cette requête peut être, par exemple, une requête d'authentification auprès de l'élément sécurisé 2012. Cette requête peut, par exemple, comprendre des informations sur le type de transaction NFC autorisé à être mis en oeuvre par l'application.

A une étape 702 (NFC -> CARD cmd5), successive à l'étape 701, la couche de commande 2019 envoie la requête à l'élément sécurisé 2012. Si l'application 2014 est autorisée (sortie Y) l'étape suivante est une étape 703 (SE -> DRIVERS evt5), sinon (sortie N) l'étape suivante est une étape 704 (App error). Selon une variante de réalisation, la vérification de l'autorisation de l'application 2014 n'est pas réalisée à l'étape 702, et l'étape suivante est directement l'étape 703.

A l'étape 704, l'application 2014 a été reconnue comme non autorisée et n'est donc pas en mesure de mettre en oeuvre une transaction. La couche de commande 2019 peut, par exemple, empêcher toute demande de démarrage de transaction provenant de l'application 2014.

A l'étape 703, successive à l'étape 702, l'élément sécurisé 2012 envoie à la couche de commande 2019 une instruction evt5, ou autorisation temporaire evt5, selon laquelle l'application 2014 peut mettre en oeuvre une transaction NFC. Cette instruction evt5 peut, par exemple, concerner une seule transaction NFC, ou plusieurs transactions NFC consécutives, ou toutes les transactions NFC de l'application 2014. En pratique l'instruction evt5 peut être un évènement logiciel. L'envoi de l'instruction evt4 peut être, par exemple, l'envoi d'un évènement logiciel de type transaction comme défini par la norme HCI, cet envoi étant réalisé par l'intermédiaire d'un canal de communication dédié reliant l'élément sécurisé 2012 et le processeur 2011. L'instruction evt4 peut, dans ce cas, comprendre différents paramètres indiquant, par exemple :
- l'application autorisée à effectuer une transaction NFC ;
- le ou les types de transaction NFC concernés ; et/ou
- le nombre de transactions NFC que l'application est autorisée à mettre en oeuvre.

Selon un exemple, l'application 2014 peut être autorisée à mettre en oeuvre deux transactions NFC de type bancaire.

A une étape 705 (App -> NFC cmd5), consécutive à l'étape 703, mais pouvant être directement consécutive à l'étape 701, l'application 2014 décide de mettre en oeuvre une transaction NFC avec le module distant 203. L'application 2014 transmet alors une requête aux couches logicielles d'interface 2016 pour utiliser le module NFC 2013 pour envoyer une commande cmd5 au module distant 203. Cette opération n'étant, à priori, pas une opération sensible, la couche de commande 2019 autorise cette opération.

A une étape 706 (NFC -> CARD cmd5), successive à l'étape 705, le module NFC 2013 a reçu la commande cmd5 à envoyer au module distant 203 et l'envoie en utilisant un procédé de communication en champ proche du type de celui décrit précédemment.

A une étape 707 (CARD -> NFC ans5), successive à l'étape 706, le module distant 203 a reçu et traité la commande cmd5 et fournit une réponse ans5 au module NFC 2013 du terminal 201. Cette réponse ans5, comme la réponse ans1 décrite en relation avec la figure 3, est susceptible de contenir des données sensibles.

A une étape 708 (NFC -> DRIVERS ans5), successive à l'étape 707, le module NFC 2013 envoie, à l'application 2014, la réponse ans5, mais cet envoi est intercepté par la couche de commande 2019 (DRIVERS).

A une étape 709 (DRIVERS evt5 ?), successive à l'étape 708, l'instruction evt5 reçue par la couche de commande 2019 (DRIVERS) est mise en oeuvre. Si l'instruction evt5 autorise l'application à mettre en oeuvre la transaction NFC (sortie Y) l'étape suivante est une étape 710 (DRIVERS -> App ans5), sinon (sortie N) l'étape suivante est une étape 711 (App error).

A l'étape 710, l'application 2014 étant autorisée à communiquer avec l'élément sécurisé 2012, la couche de commande 2018 lui transmet la réponse ans5.

A une étape 712 (Transaction continue), successive à l'étape 710, l'application 2014 peut continuer à envoyer des commandes et à recevoir des réponses de la part du module distant 203 en utilisant le même mécanisme décrit précédemment. Selon une variante, la couche de commande 2019 peut vérifier à chaque échange si l'application 2014 est autorisée à mettre en oeuvre une transaction NFC, ou alors la couche de commande 2019 peut considérer que l'autorisation de l'instruction evt5 est valable jusqu'à la fin de la transaction NFC en cours ou bien pendant une durée prédéterminée. La couche de commande 2019 (DRIVERS) peut, en outre, utiliser des paramètres fournis par l'instruction evt4.

A l'étape 711, l'application 2014 a été reconnue comme non autorisée et n'est donc pas autorisée à recevoir la réponse ans5. En étant reconnue comme non autorisée l'application 2014 n'aura pas accès aux données sensibles de la transaction NFC.

A une étape 713 (Transaction stop), successive à l'étape 711, l'application 2014 n'ayant pas accès aux données sensibles et/ou secrètes, l'application 2014 ne peut pas mener la transaction NFC, et la transaction NFC s'arrête d'elle-même.

Un avantage de ce mode de réalisation est qu'une application n'étant pas autorisée par la couche de commande 2019 ne peut avoir accès aux données sensibles envoyées par le module distant, l'autorisation de l'application provenant initialement de l'élément sécurisé 2012.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le terminal et le module NFC peuvent ne mettre en oeuvre de tels procédés que pour des transactions NFC sensibles, c'est-à-dire des transactions pendant lesquelles des données sensibles et/ou secrètes sont échangées. Le module NFC, la couche d'interface 2018, et la couche de commande 2019 peuvent, par exemple, être capables de distinguer si une transaction NFC est sensible ou non. Cette distinction peut être réalisée sur la base du contexte dans lequel la transaction est mise en oeuvre, sur la base d'instructions, sur la base de la sélection d'une application spécifique, ou autre.

Enfin, la mise en oeuvre pratique des modes de réalisation et variantes décrits est à la portée de la personne du métier à partir des indications fonctionnelles données ci-dessus.

## Revendications

1. Procédé de réalisation d'une transaction NFC entre un terminal mobile (201) et un module distant (203), ledit terminal (201) comprenant un processeur (2011) hébergeant une application (2014) établissant la transaction NFC, un module de communication en champ proche (2013), et un élément sécurisé (2012) distinct du processeur (2014), le procédé comprenant au moins les étapes successives suivantes :
(a) ledit module de communication en champ proche (2013) stocke, dans ledit élément sécurisé (2012), des premières données (ans3) envoyées par ledit module distant (203) ;
(b) ledit module de communication en champ proche (2013) envoie des deuxièmes données (s(ans3)) à ladite première application (2014) pour l'avertir que lesdites premières données (ans3) ont été stockées dans ledit élément sécurisé (2012); et
(c) ladite première application (2014) demande audit élément sécurisé (2012) de lui fournir lesdites premières données (ans3).

2. Terminal mobile adapté à mettre en oeuvre une transaction NFC avec un module distant, le terminal comprenant un processeur (2011) hébergeant une application (2014) établissant la transaction NFC, un module de communication en champ proche (2013), et un élément sécurisé (2012) distinct du processeur (2014), le procédé de réalisation de la transaction NFC comprenant au moins les étapes successives suivantes :
(a) ledit module de communication en champ proche (2013) stocke, dans ledit élément sécurisé (2012), des premières données (ans3) envoyées par ledit module distant (203) ;
(b) ledit module de communication en champ proche (2013) envoie des deuxièmes données (s(ans3)) à ladite première application (2014) pour l'avertir que lesdites premières données (ans3) ont été stockées dans ledit élément sécurisé (2012); et
(c) ladite première application (2014) demande audit élément sécurisé (2012) de lui fournir lesdites premières données (ans3).

3. Procédé selon la revendication 1 ou terminal selon la revendication 2, dans lequel l'application (2014) est autorisée à mettre en oeuvre une transaction NFC par des logiciels d'interface (2016), les logiciels d'interface (2016) étant des logiciels hébergés par le processeur (2011) et exécutant des commandes envoyées par ladite application (2014).

4. Procédé ou terminal selon la revendication 3, dans lequel si les logiciels d'interface (2016) ne comprennent pas d'autorisation concernant ladite application (2014) alors pendant l'étape (b) les logiciels d'interface (2016) interdisent à l'application (2014) de demander la clé à l'élément sécurisé (2012).

5. Procédé ou terminal selon la revendication 3 ou 4, dans lequel l'application (2014) est une application système, ou
dans lequel l'application (2014) est une application fiable ayant reçu une autorisation permanente à mettre en oeuvre une transaction NFC, ou
l'application (2014) a reçu une autorisation temporaire pour mettre en oeuvre une transaction NFC, dans lequel l'élément sécurisé (2012) fournit l'autorisation temporaire concernant l'application (2014) auxdits logiciels d'interface, l'élément sécurisé (2012) ayant obtenu cette autorisation temporaire auprès d'un serveur extérieur.

6. Procédé selon l'une quelconque des revendications 1, 3 à 5, ou terminal selon l'une quelconque des revendications 2 à 5, dans lequel lesdites deuxièmes données (s(ans3)) sont représentatives desdites premières données (ans3).

7. Procédé selon l'une quelconque des revendications 1, 3 à 5, ou terminal selon l'une quelconque des revendications 2 à 5, dans lequel lesdites deuxièmes données (s(ans3)) sont des données aléatoires.

8. Procédé selon l'une quelconque des revendications 1, 3 à 7, ou terminal selon l'une quelconque des revendications 2 à 7, dans lequel ledit élément sécurisé chiffre lesdites premières données (ans3).

9. Procédé ou terminal selon la revendication 8, dans lequel lesdites premières données (ans3) sont chiffrées avec un algorithme de chiffrement asymétrique.

10. Procédé selon l'une quelconque des revendications 1, 3 à 9, ou terminal selon l'une quelconque des revendications 2 à 9, dans lequel si l'application (2014) n'est pas autorisée à mettre en oeuvre une transaction NFC alors pendant l'étape (b) l'élément sécurisé (2012) refuse d'envoyer les premières données (ans3) à ladite application (2012).

11. Procédé selon l'une quelconque des revendications 1, 3 à 10, ou terminal selon l'une quelconque des revendications 2 à 10, dans lequel la transaction NFC est une transaction mise en oeuvre par un procédé de communication en champ proche.

12. Procédé selon l'une quelconque des revendications 1, 3 à 11, ou terminal selon l'une quelconque des revendications 2 à 11, dans lequel la transaction NFC est une transaction pendant laquelle le terminal (201) et le module distant sont susceptibles d'échanger des troisièmes données secrètes.

13. Procédé selon l'une quelconque des revendications 1, 3 à 12, ou terminal selon l'une quelconque des revendications 2 à 12, dans lequel la transaction NFC est une transaction bancaire.

14. Procédé selon l'une quelconque des revendications 1, 3 à 13, ou terminal selon l'une quelconque des revendications 2 à 13, dans lequel l'étape (a) est précédée par une étape (d) dans laquelle le module de communication en champ proche (2013) est capable de détecter que des données sont des données sensibles.

15. Procédé ou terminal selon la revendication 14, dans lequel l'étape (a) est précédée par une étape (d) dans laquelle le module de communication en champ proche (2013) détecte que les premières données (ans1) comprennent des données sensibles.

16. Système comprenant un terminal selon l'une quelconque des revendications 2 à 15 et un module distant.

## Patentansprüche

1. Verfahren zur Durchführung einer NFC-Transaktion zwischen einem mobilen Endgerät (201) und einem entfernten Modul (203), wobei das Endgerät (201) einen Prozessor (2011), der eine Anwendung (2014) zur Herstellung der NFC-Transaktion hostet, ein Nahfeldkommunikationsmodul (2013) und ein vom Prozessor (2014) getrenntes Sicherheitselement (2012) aufweist, wobei das Verfahren mindestens die folgenden aufeinanderfolgenden Schritte aufweist:
(a) das Nahfeld-Kommunikationsmodul (2013) speichert in dem Sicherheitselement (2012) erste Daten (ans3), die von dem entfernten Modul (203) gesendet wurden;
(b) das Nahfeld-Kommunikationsmodul (2013) sendet zweite Daten (s(ans3)) an die erste Anwendung (2014), um diese zu benachrichtigen, dass die ersten Daten (ans3) in dem sicheren Element (2012) gespeichert wurden; und
(c) die erste Anwendung (2014) fordert das sichere Element (2012) auf, ihr die ersten Daten (ans3) zu liefern.

2. Mobiles Endgerät, das geeignet ist, eine NFC-Transaktion mit einem entfernten Modul durchzuführen, wobei das Endgerät einen Prozessor (2011), der eine Anwendung (2014) hostet, die die NFC-Transaktion herstellt, ein Nahfeldkommunikationsmodul (2013) und ein vom Prozessor (2014) getrenntes Sicherheitselement (2012)aufweist, wobei das Verfahren zur Durchführung der NFC-Transaktion mindestens die folgenden aufeinanderfolgenden Schritte aufweist:
(a) das Nahfeld-Kommunikationsmodul (2013) speichert in dem Sicherheitselement (2012) erste Daten (ans3), die von dem entfernten Modul (203) gesendet wurden;
(b) das Nahfeld-Kommunikationsmodul (2013) sendet zweite Daten (s(ans3)) an die erste Anwendung (2014), um diese zu benachrichtigen, dass die ersten Daten (ans3) in dem sicheren Element (2012) gespeichert wurden; und
(c) die erste Anwendung (2014) fordert das sichere Element (2012) auf, ihr die ersten Daten (ans3) zu liefern.

3. Verfahren nach Anspruch 1 oder Endgerät nach Anspruch 2, wobei die Anwendung (2014) autorisiert ist, eine NFC-Transaktion durch eine Schnittstellensoftware (2016) zu implementieren, wobei die Schnittstellensoftware (2016) eine Software ist, die von dem Prozessor (2011) gehostet wird und Anweisungen ausführt, die von der Anwendung (2014) gesendet werden.

4. Verfahren oder Endgerät nach Anspruch 3, wobei, wenn die Schnittstellensoftware (2016) keine Autorisierung bezüglich der Anwendung (2014) aufweist, die Schnittstellensoftware (2016) während des Schritts (b) der Anwendung (2014) verbietet, das sichere Element (2012) nach dem Schlüssel zu fragen.

5. Verfahren oder Endgerät nach Anspruch 3 oder 4, wobei die Anwendung (2014) eine Systemanwendung ist, oder wobei die Anwendung (2014) eine zuverlässige Anwendung ist, die eine permanente Autorisierung zur Durchführung einer NFC-Transaktion erhalten hat, oder
die Anwendung (2014) eine temporäre Autorisierung erhalten hat, um eine NFC-Transaktion durchzuführen, wobei das sichere Element (2012) die temporäre Autorisierung bezüglich der Anwendung (2014) an die Schnittstellensoftware liefert, wobei das sichere Element (2012) diese temporäre Autorisierung von einem externen Server erhalten hat.

6. Verfahren nach einem der Ansprüche 1, 3 bis 5 oder Endgerät nach einem der Ansprüche 2 bis 5, wobei die zweiten Daten (s(ans3)) repräsentativ für die ersten Daten (ans3) sind.

7. Verfahren nach einem der Ansprüche 1, 3 bis 5 oder Endgerät nach einem der Ansprüche 2 bis 5, wobei die zweiten Daten (s(ans3)) Zufallsdaten sind.

8. Verfahren nach einem der Ansprüche 1, 3 bis 7 oder Endgerät nach einem der Ansprüche 2 bis 7, wobei das sichere Element die ersten Daten (ans3) verschlüsselt.

9. Verfahren oder Endgerät nach Anspruch 8, wobei die ersten Daten (ans3) mit einem asymmetrischen Verschlüsselungsalgorithmus verschlüsselt werden.

10. Verfahren nach einem der Ansprüche 1, 3 bis 9 oder Endgerät nach einem der Ansprüche 2 bis 9, wobei, wenn die Anwendung (2014) nicht autorisiert ist, eine NFC-Transaktion durchzuführen, das sichere Element (2012) während des Schritts (b) das Senden der ersten Daten (ans3) an die Anwendung (2012) ablehnt.

11. Verfahren nach einem der Ansprüche 1, 3 bis 10 oder Endgerät nach einem der Ansprüche 2 bis 10, wobei die NFC-Transaktion eine Transaktion ist, die durch ein Nahfeldkommunikationsverfahren durchgeführt wird.

12. Verfahren nach einem der Ansprüche 1, 3 bis 11 oder Endgerät nach einem der Ansprüche 2 bis 11, wobei die NFC-Transaktion eine Transaktion ist, bei der das Endgerät (201) und das entfernte Modul wahrscheinlich dritte geheime Daten austauschen.

13. Verfahren nach einem der Ansprüche 1, 3 bis 12 oder Endgerät nach einem der Ansprüche 2 bis 12, wobei die NFC-Transaktion eine Banktransaktion ist.

14. Verfahren nach einem der Ansprüche 1, 3 bis 13 oder Endgerät nach einem der Ansprüche 2 bis 13, wobei dem Schritt (a) ein Schritt (d) vorausgeht, in dem das Nahfeldkommunikationsmodul (2013) in der Lage ist, zu erkennen, dass es sich bei den Daten um kritische Daten handelt.

15. Verfahren oder Endgerät nach Anspruch 14, wobei dem Schritt (a) ein Schritt (d) vorausgeht, bei dem das Nahfeldkommunikationsmodul (2013) erkennt, dass die ersten Daten (ans1) kritische Daten aufweisen.

16. System mit einem Endgerät nach einem der Ansprüche 2 bis 15 und einem entfernten Modul.

## Claims

1. Method of implementation of a NFC transaction between a mobile terminal (201) and a distant module (203), said terminal (201) comprising a processor (2011) hosting an application (2014) establishing the NFC transaction, a near-field communication module (2013), and a secure element (2012) distinct from the processor (2014), the method comprising at least the following successive steps:
(a) said near-field communication module (2013) stores, in said secure element (2012), first data (ans3) sent by said distant module (203);
(b) said near-field communication module (2013) sends second data (s(ans3)) to said first application (2014) to warn it that said first data (ans3) have been stored in said secure element (2012); and
(c) said first application (2014) asks said secure element (2012) to deliver said first data (ans3) thereto.

2. Mobile terminal adapted to implementing a NFC transaction with a distant module, the terminal comprising a processor (2011) hosting an application (2014) establishing the NFC transaction, a near-field communication module (2013), and a secure element (2012) distinct from the processor (2014), the method of implementing the NFC transaction comprising at least the following successive steps:
(a) said near-field communication module (2013) stores, in said secure element (2012), first data (ans3) sent by said distant module (203);
(b) said near-field communication module (2013) sends second data (s(ans3)) to said first application (2014) to warn it that said first data (ans3) have been stored in said secure element (2012); and
(c) said first application (2014) asks said secure element (2012) to supply said first data (ans3) thereto.

3. Method according to claim 1 or terminal according to claim 2, wherein the application (2014) is authorized to implement a NFC transaction by interface software (2016), the interface software (2016) being software hosted by the processor (2011) and executing instructions sent by said application (2014).

4. Method or terminal according to claim 3, wherein, if the interface software (2016) comprises no authorization concerning said application (2014), then during step (b), the interface software (2016) forbids the application (2014) to ask the secure element (2012) for the key.

5. Method or terminal according to claim 3 or 4, wherein the application (2014) is a system application, or wherein the application (2014) is a reliable application having received a permanent authorization to implement a NFC transaction, or
the application (2014) has received a temporary authorization to implement a NFC transaction, wherein the secure element (2012) delivers the temporary authorization concerning the application (2014) to said interface software, the secure element (2012) having obtained this temporary authorization from an external server.

6. Method according to any of claims 1, 3 to 5, or terminal according to any of claims 2 to 5, wherein said second data (s(ans3)) are representative of said first data (ans3) .

7. Method according to any of claims 1, 3 to 5, or terminal according to any of claims 2 to 5, wherein said second data (s(ans3)) are random data.

8. Method according to any of claims 1, 3 to 7, or terminal according to any of claims 2 to 7, wherein said secure element ciphers said first data (ans3).

9. Method or terminal according to claim 8, wherein said first data (ans3) are ciphered with an asymmetrical cipher algorithm.

10. Method according to any of claims 1, 3 to 9, or terminal according to any of claims 2 to 9, wherein if the application (2014) is not authorized to implement a NFC transaction, then during step (b) the secure element (2012) refuses to send the first data (ans3) to said application (2012).

11. Method according to any of claims 1, 3 to 10, or terminal according to any of claims 2 to 10, wherein the NFC transaction is a transaction implemented by a near-field communication method.

12. Method according to any of claims 1, 3 to 11, or terminal according to any of claims 2 to 11, wherein the NFC transaction is a transaction during which the terminal (201) and the distant module are likely to exchange third secret data.

13. Method according to any of claims 1, 3 to 12, or terminal according to any of claims 2 to 12, wherein the NFC transaction is a bank transaction.

14. Method according to any of claims 1, 3 to 13, or terminal according to any of claims 2 to 13, wherein step (a) is preceded by a step (d) during which the near-field communication module (2013) is capable of detecting that data are critical data.

15. Method or terminal according to claim 14, wherein step (a) is preceded by a step (d) during which the near-field communication module (2013) detects that the first data (ans1) comprise critical data.

16. System comprising a terminal according to any of claims 2 to 15 and a distant module.
